# EUROPEAN PATENT SPECIFICATION

(11) **EP 0 876 867 B1**
(45) Date of publication and mention of the grant of the patent: **26.06.2002**
(21) Application number: 98850047.6
(22) Date of filing: 03.04.1998
(51) Int. Cl.: B23B 51/04

(54) **Drill**
Bohrer
Foret

(30) Priority: 30.04.1997 SE 9701626
(43) Date of publication of application: 11.11.1998
(73) Proprietor: SECO TOOLS AB, S-737 82 Fagersta (SE)
(72) Inventor: Möller, Claes, 603 85 Norrköping (SE)
(74) Representative: Taquist, Lennart

(56) References cited:
- EP-A- 0 750 960
- DE-U- 29 618 293
- GB-A- 1 105 539
- DATABASE WPI Section PQ, Week 199204 Derwent Publications Ltd., London, GB; Class P54, AN 1992-031465 & SU 1 646 711 A (AS UKR HARD MATERIALS), 7. Mai 1991 (1991-05-07)

## Description

### Technical field of the invention

The present invention relates to a drill, for chip removing machining, including a shank with a first tip forming end, with at least one cutting edge, and a second opposed end, two chip flutes extending from the first tip forming end to the opposed second end of the shank, a cooling channel situated between the chip flutes which channel is parallel with a center axis of the shank and extends through the drill shank from the second opposite end and in direction towards the first tip forming end, said cooling channel situated between the chip flutes in a position between the first tip forming end and the second opposite end branches into two branch channels, which terminate in the first tip forming end.

### Prior art

EP-750 960-A discloses such a drill.

Drills of the above-captioned type are used for chip removing machining and especially for drill holes in metallic work pieces. During the machining chips are produced at the tip forming end of the drill shank, whereby the chips are formed and transported from the tip forming end of the shank to the opposite end of the drill shank. Said transport is being performed via the chip flutes.

At a prior art drill of the above-captioned type it is previously known to subdivide a central cooling channel into two branch channels before the cooling channel reaches the tip forming end of the drill. These two branch channels consequently open into the tip forming end at a distance from the axis of rotation of the drill. The center axis of the central cooling channel thereby normally coincides with the center axis of the drill. However it has showed that at such a constructive design of the drill the depth of the chip flute of the central insert is too little at certain areas of applications for the drill. The chips generated by the central insert have a tendency to assume circular shape, and therefor the depth of the chip flute should somewhat outreach the diameter of the circular chip. In SU 1 646 711 A is shown a drill having an eccentric cooling channel which during drilling may be obstructed.

### Objects and features of the invention

The object of the present invention is to provide a drill of the above-captioned type where a simple production of the drill is combined with an adequate transport of the chips in the chip flutes, said transport being performed by means of a cooling medium, preferably a coolant, which is supplied via the cooling channel and is returned via the chip flutes. Another object of the present invention is that the design of the cooling channel located between the chip flutes, and the chip flutes shall be such that the strength of the drill is not negatively influenced as compared to known drills. The objects of the present invention are realized by a drill which comprises the features as indicated in claim 1.

### Short description of the drawings

Below an embodiment of the invention is described with reference to the enclosed drawings, wherein
- Fig. 1: shows a side view of a shank of a drill according to the invention;
- Fig. 2: shows a section along II-II in Fig. 1;
- Fig. 3: shows a section along III-III in Fig. 1;
- Fig. 4: shows a section along IV-IV in Fig. 2; and
- Fig. 5: schematically shows a transverse section through of the drill shank
where chip profiles and a bore wall are shown.

### Detailed description of a preferred embodiment of the invention

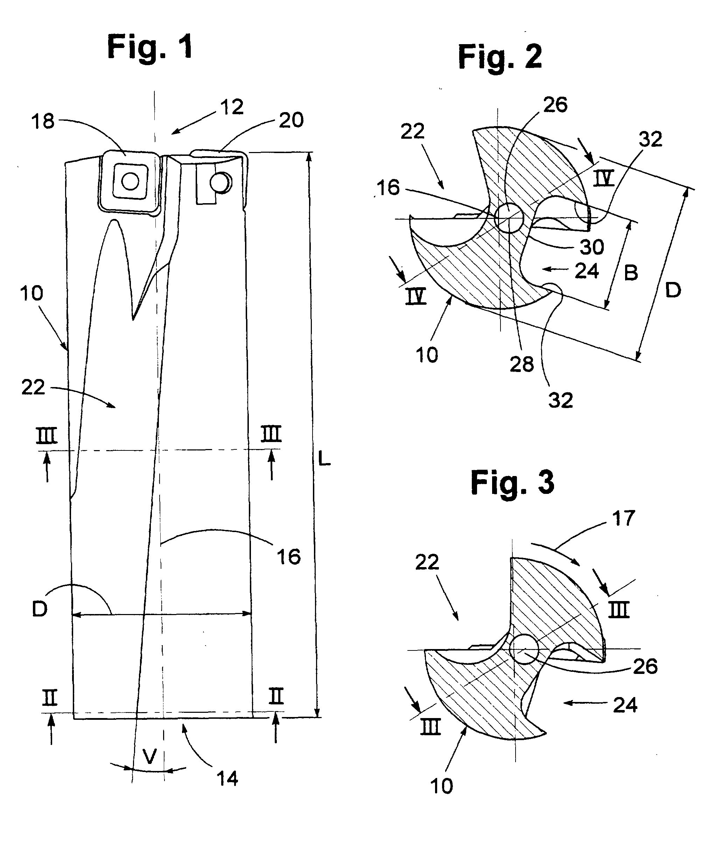

The shank 10 of a drill shown in Fig. 1 according to the present invention has a first tip forming end 12 and a second opposed end 14, which is intended to be connected to a holder (not shown). The holder is intended to be inserted in an adapter (not shown) of a machine tool. The shank 10 has a longitudinal center axis 16, which also constitutes the axis of rotation of the drill. The rotational direction of the drill is depicted by the arrow 17 in Fig. 3.

A central insert 18 and a peripheral insert 20 (partly hidden) are provided at the first tip forming end 12 of the shank 10. The cutting inserts 18, 20 are preferably exchangeable. The shank 10 has a substantially constant diameter D along its entire length, which in Fig. 1 is defined by L.

In the shown embodiment two chip flutes 22, 24, of which only one 22 is shown in Fig. 1, extend helically from the first tip forming end 12 to the second opposite end 14 where the chip flutes 22, 24 are finished by going out into nothing in the holder. Such as is shown in Fig. 1 the chip flute 22 has a certain helix angle v. A preferred value of said angle v lies within the interval of 5°-7.5°. The chip flute 24 not shown in Fig. 1 has a just as great helix angle v. In this connection it shall be noted that within the limits of the invention it is possible with a negative helix angle at the same rotational direction, see the arrow 17. A negative helix angle is advantageous for vibrational dampening of the drill 10.

Each chip flute 22, 24 has a cross-sectional shape which is substantially constant along the entire length L of the shank 10.

The drill according to the invention is preferably intended for so called short hole drills and in the present patent application relates to drills where the length L of the shank relates to the shank diameter D (see Fig. 1) as follows: L ≤ 3xD. At such a short hole drill according to the present invention the helical twist over the entire length L of the shank 10 is about 30° if a suitable helix angle v is chosen within the above-identified range.

Such as shown in Figs. 2-4 a cooling channel 26 located between the chip flutes runs along a part of the length L of the shank 10, said cooling channel 26 extending from the second end 14 of the shank 10 and through the shank 10 in direction towards the tip forming first end 12 to about the half of the length L of the shank 10. In the opposite direction the cooling channel 26 located between the chip flutes extends through the holder (not shown). The cooling channel 26 terminates in the free end of holder. The cooling channel 26 located between the chip flutes extends parallel with the central axis 16 of the shank 10 at least in the shank 10. The cooling channel 26 however, is eccentrically located relative to said central axis 16, see Figs. 2-4 where it clearly appears that a center axis 28 of the cooling channel 26 is located beside the center axis 16 of the shank 10.

Preferably, the cooling channel 26 extends parallel with the central axis 16 of the shank 10 also in the not shown holder and at the same distance from the central axis 16 as in the shank 10, i.e. the cooling channel 26 runs recti-linearly through both the shank 10 and the holder.

By comparing Figs. 2 and 3 it is evident that despite the fact that the cooling channel 26 located between the chip flutes extends recti-linearly through the shank 12 while the chip flutes 22, 24 are helically twisted in the axial direction of the shank 10 the smallest goods thickness between the cooling channel 26 and respective chip flute 22, 24 is substantially constant and equal at each side of the cooling channel 26, along the part of the shank 10 which houses the between the chip flutes located cooling channel 26. The chip flutes 22, 24 thus extend helically and has the center axis 28 of the cooling channel 26 located between the chip flutes as a twist center. By having the goods thickness constant in the axial direction as well as equal at each side of the between the chip flutes situated cooling channel 26 is advantageous in the sense of the drill 10 rigidity. In this connection shall be pointed out that the cross section of the cooling channel 26 located between the chip flutes cannot be made too small since then unreasonable demands are put on the feed force of the coolant. A preferred relationship according to the present invention is that the diameter of the cooling channel 26 located between the chip flutes constitutes 14-20% of the diameter D of the shank 10.

From Figs. 2-4 is evident that the eccentricity of the cooling channel 26 is such that the central axis 16 of the shank 10 is located in the cooling channel 26 located between the chip flutes. It is perceived that the cooling channel 26 located between the chip flutes cannot not have a too eccentrical position since then the depth of the chip flute 24 of the peripheral insert 20 becomes too small. This will be discussed further below.

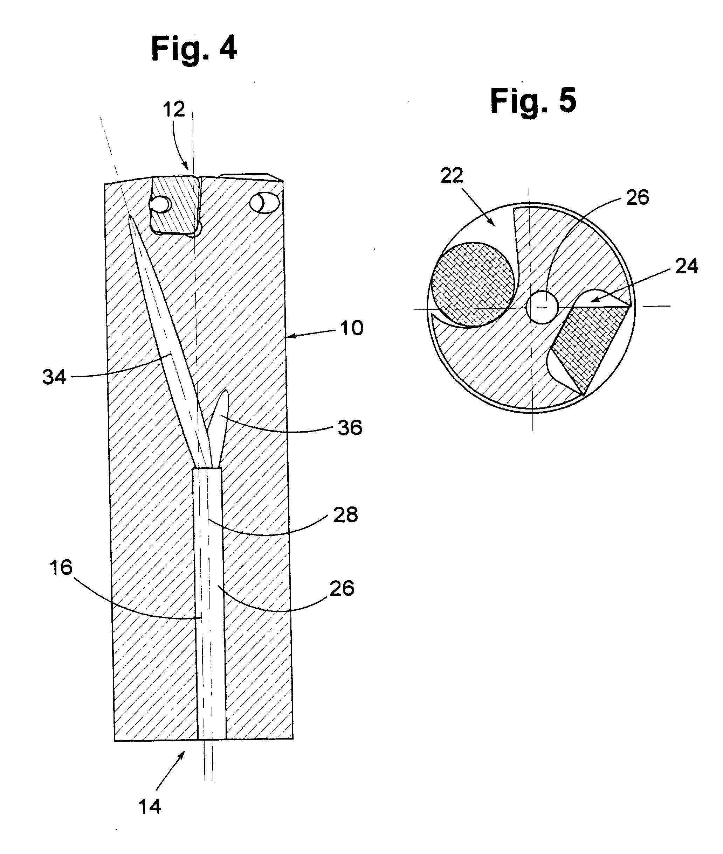

In the shown embodiment the cooling channel 26 located between the chip flutes is eccentrically displaced such that the depth of the chip flute 22 for the central insert 18 can be increased while the depth of the chip flute 24 for the peripheral insert 20 must be reduced in a corresponding degree. It is generally known that the chips from the central insert 22 are circularly shaped while the chips from the peripheral insert 20 have a trapezoidal contour, see Fig. 5. The dimensions of the chips depend to a large extent on the cutting geometry of the tip forming end 12, and therefor one can clarify in an empirical way which maximal chip dimensions a certain drill generates. This knowledge is then used at dimensioning of the chip flutes 22, 24.

Such as is illustrated in Fig. 5 it is important that the chip flute 22 for the central insert 18 has a depth which provides space in the chip flute 22 for the circularly shaped chips from the central insert 18. In a corresponding manner the chip flute 24 for the peripheral insert 20 has a cross sectional area which to the utmost possible extent is adapted to the normal trapezoidal contour of the chips from the peripheral insert 20.

From Figs. 2 and 3 is evident that the chip flute 24 has a substantially planar bottom 30 and planar side-walls 32. The side-walls 32 are essentially parallel with each other. The side-walls 32 and the bottom 30 are connected to each other via softly rounded transitions. The relationship between the width B of the chip flute 24 and the diameter D of the shank 10 is preferably: B ≈ 0,5 D. Through study of Fig. 5 is perceived that the chip flute 24 in a striking manner has been adapted to the trapezoidal shape of the chip, especially the parallel side-walls of the chip flute 24 only a minimum of goods has been removed in the field of the chip flute 24 at the periphery of the shank 10, which is advantageous for the drill rigidity.

Such as most clearly shown in Fig. 3 the cooling channel 26 located between the chip flutes divides into two branch channels 34 and 36, which extend from the cooling channel 26 located between the chip flutes to the tip forming end 12, into which said branch channels 34 and 36 open. The branch channel 36, which terminates closest to the peripheral insert 20 also opens into the jacket surface of the shank 10, which however is not shown in Fig. 3.

The invention is preferably but not exclusively intended for helix drills, i.e. it is possible to apply the invention also on drills having straight chip flutes.

## Claims

1. Drill for chip removing machining, comprising a shank (10) having a first tip forming end (12), with at least one cutting edge, and a second opposed end (14), two chip flutes (22, 24) which extend from the first tip forming end (12) to the opposite end (14) of the shank (10), a cooling channel (26) located between the chip flutes (22,24) that is parallel to a center axis (16) of the shank (10) and extends through the shank (10) of the drill from the second end (14) and in direction towards the tip forming end (12), said cooling channel (26) located between the chip flutes (22,24) in a position between the first tip forming end (12) and the second end (14) dividing into two branch channels (34, 36), which terminate in the first tip forming end (12),
**characterized by** that the cooling channel (26) located between the chip flutes (22,24) is eccentrically located relative to said center axis (16) of the shank (10) and that the center axis (16) of the shank (10) is situated in the cooling channel (26) located between the chip flutes (22,24).

2. Drill according to claim 1,
**characterized by** that the smallest goods thickness between the cooling channel (26) located between the chip flutes (22,24) and the respective chip flute (22,24) is substantially constant along the entire length of the cooling channel (26) located between the chip flutes (22,24).

3. Drill according to anyone of the preceding claims,
**characterized by** that the smallest goods thickness between the cooling channel (26) located between the chip flutes (22,24) and the respective chip flute (22,24) is substantially equal at each side of the cooling channel (26) located between the chip flutes (22,24).

4. Drill according to anyone of the preceding claims,
**characterized by** that the drill is a helix drill and that the chip flutes have a helix angle (v) in the interval 5° - 7,5°.

5. Drill according to claim 4,
**characterized by that** the drill is a short hole drill, i.e. the relation of the length L of the shank (10) and the diameter D of the shank (10) is: L ≤ 3xD, and that the total helical twist along the shank (10) of the drill is in the magnitude of 30°.

6. Drill according to anyone of the preceding claims,
**characterized by** that the diameter of the cooling channel (26) located between the chip flutes (22, 24) constitutes 14-20% of the diameter (D) of the shank (10).

7. Drill according to anyone of the preceding claims,
**characterized by** that one of the chip flutes (22) is connected to a central insert (18), said chip flute (22) having a part-circular cross-sectional shape.

8. Drill according to anyone of the preceding claims,
**characterized by** that one of the chip flutes (24) is connected to a peripheral insert (20), said chip flute (24) having substantially parallel side-walls (32).

9. Drill according to claim 8,
**characterized by** that the chip flute (24) has a width B which is approximately the same as the half diameter D of the shank (10), i.e. B ≈ 0,5 D.

## Patentansprüche

1. Bohrer zum spanabhebenden Bearbeiten mit einem Schaft (10) mit einem ersten, eine Spitze bildenden Ende (12) mit mindestens einer Schneidkante und einem zweiten, gegenüberliegenden Ende (14), zwei Spannuten (22, 24), die sich von dem ersten, die Spitze bildenden Ende (12) zu dem gegenüberliegenden Ende (14) des Schaftes (10) erstrecken, einem Kühlkanal (26), der zwischen den Spannuten (22, 24) angeordnet ist, der parallel zu einer Mittelachse (16) des Schaftes (10) ist und sich durch den Schaft (10) des Bohrers von dem zweiten Ende (14) und in Richtung auf das die Spitze bildende Ende (12) hin erstreckt, wobei der Kühlkanal (26) zwischen den Spannuten (22, 24) in einer Position zwischen dem ersten, die Spitze bildenden Ende (12) und dem zweiten Ende (14) angeordnet ist und sich in zwei Zweigkanäle (34, 36) teilt, die in dem ersten, die Spitze bildenden Ende (12) enden, **dadurch gekennzeichnet, daß** der Kühlkanal (26), der zwischen den Spannuten (22, 24) angeordnet ist, relativ zu der Mittelachse (16) des Schaftes (10) exzentrisch angeordnet ist und daß die Mittelachse (16) des Schaftes (10) in dem zwischen den Spannuten (22, 24) angeordneten Kühlkanal angeordnet ist.

2. Bohrer nach Anspruch 1, **dadurch gekennzeichnet, daß** die kleinste Materialdicke zwischen dem Kühlkanal (26), der zwischen den Spannuten (22, 24) angeordnet ist, und der entsprechenden Spannut (22, 24) über die ganze Länge des Kühlkanals (26), der zwischen den Spannuten (22, 24) angeordnet ist, im wesentlichen konstant ist.

3. Bohrer nach einem der vorhergehenden Ansprüche, **dadurch gekennzeichnet, daß** die kleinste Materialdicke zwischen dem zwischen den Spannuten (22, 24) angeordneten Kühlkanal (26) und der betreffenden Spannut (22, 24) an jedem Ende des zwischen den Spannuten (22, 24) angeordneten Kühlkanals im wesentlichen gleich ist.

4. Bohrer nach einem der vorhergehenden Ansprüche, **dadurch gekennzeichnet, daß** der Bohrer ein Spiralbohrer ist und daß die Spannuten einen Spiralwinkel (v) im Bereich von 5° - 7,5° haben.

5. Bohrer nach Anspruch 4, **dadurch gekennzeichnet, daß** der Bohrer ein Kurzlochbohrer ist, d.h. das Verhältnis der Länge L des Schaftes (10) zu dem Durchmesser D des Schaftes (10) ist: L ≤ 3 x D, und daß die gesamte Spiralverdrillung längs des Schaftes (10) des Bohrers in der Größenordnung von 30° liegt.

6. Bohrer nach einem der vorhergehenden Ansprüche, **dadurch gekennzeichnet, daß** der Durchmesser des Kühlkanals (26), der zwischen den Spannuten (22, 24) angeordnet ist, 12- 20% des Durchmessers (D) des Schaftes (10) bildet.

7. Bohrer nach einem der vorhergehenden Ansprüche, **dadurch gekennzeichnet, daß** eine der Spannuten (22) mit einem Mitteleinsatz (18) verbunden ist und die Spannut (22) eine teilkreisförmige Querschnittsform hat.

8. Bohrer nach einem der vorhergehenden Ansprüche, **dadurch gekennzeichnet, daß** eine der Spannuten (24) mit einem Umfangseinsatz (20) verbunden ist und im wesentlichen parallele Seitenwände (32) hat.

9. Bohrer nach Anspruch 8, **dadurch gekennzeichnet, daß** die Spannut (24) eine Breite B hat, die etwa gleich groß ist wie der halbe Durchmesser D des Schaftes (10), d.h. B ≈ 0,5 D.

## Revendications

1. Foret destiné à un usinage par enlèvement de copeaux, comprenant une tige (10) présentant une première extrémité formant une pointe (12), comportant au moins une arête de coupe, et une seconde extrémité opposée (14), deux cannelures pour copeaux (22, 24) qui s'étendent de la première extrémité formant une pointe (12) à l'extrémité opposée (14) de la tige (10), un canal de refroidissement (26) situé entre les cannelures pour copeaux (22, 24) qui est parallèle à un axe central (16) de la tige (10) et qui s'étend au travers de la tige (10) du foret depuis la seconde extrémité (14) et en direction de l'extrémité formant une pointe (12), ledit canal de refroidissement (26) situé entre les cannelures pour copeaux (22, 24) dans une position entre la première extrémité formant une pointe (12) et la seconde extrémité (14) se divisant en deux canaux de ramification (34, 36), qui se terminent dans la première extrémité formant une pointe (12),
**caractérisé en ce que** le canal de refroidissement (26) situé entre les cannelures pour copeaux (22, 24) est situé de façon excentrée par rapport audit axe central (16) de la tige (10) et **en ce que** l'axe central (16) de la tige (10) est situé dans le canal de refroidissement (26) situé entre les cannelures pour copeaux (22, 24).

2. Foret selon la revendication 1,
**caractérisé en ce que** l'épaisseur de matière la plus faible entre le canal de refroidissement (26) situé entre les cannelures pour copeaux (22, 24) et la cannelure pour copeaux respective (22, 24) est sensiblement constante sur la longueur entière du canal de refroidissement (26) situé entre les cannelures pour copeaux (22, 24).

3. Foret selon l'une quelconque des revendications précédentes,
**caractérisé en ce que** l'épaisseur de matière la plus faible entre le canal de refroidissement (26) situé entre les cannelures pour copeaux (22, 24) et la cannelure pour copeaux respective (22, 24) est sensiblement égale de chaque côté du canal de refroidissement (26) situé entre les cannelures pour copeaux (22, 24).

4. Foret selon l'une quelconque des revendications précédentes,
**caractérisé en ce que** le foret est un foret à hélice et **en ce que** les cannelures pour copeaux présentent un angle d'hélice (v) dans l'intervalle de 5° à 7,5°.

5. Foret selon la revendication 4,
**caractérisé en ce que** le foret est un foret pour trous courts, c'est-à-dire que la relation de la longueur L de la tige (10) et du diamètre D de la tige (10) est : L £ 3 ¥ D, et **en ce que** la torsion hélicoïdale totale le long de la tige (10) du foret est d'une amplitude de 30°.

6. Foret selon l'une quelconque des revendications précédentes,
**caractérisé en ce que** le diamètre du canal de refroidissement (26) situé entre les cannelures pour copeaux (22, 24) constitue 14 à 20 % du diamètre (D) de la tige (10).

7. Foret selon l'une quelconque des revendications précédentes,
**caractérisé en ce que** l'une des cannelures pour copeaux (22) est reliée à une plaquette centrale (18), ladite cannelure pour copeaux (22) présentant une forme de section transversale en partie circulaire.

8. Foret selon l'une quelconque des revendications précédentes,
**caractérisé en ce que** l'une des cannelures pour copeaux (24) est reliée à une plaquette périphérique (20), ladite cannelure pour copeaux (24) présentant des parois latérales sensiblement parallèles (32).

9. Foret selon la revendication 8,
**caractérisé en ce que** la cannelure pour copeaux (24) présente une largeur B qui est approximativement identique au demi -diamètre D de la tige (10), c'est-à-dire B ª 0,5 D.
